(19) Europäisches Patentamt

European Patent Office

Office européen des brevets

(11) **EP 1 328 122 A1**

(12) **EUROPEAN PATENT APPLICATION**

(43) Date of publication:
**16.07.2003 Bulletin 2003/29**

(51) Int Cl.⁷: **H04N 7/24**, H04L 29/06, H04N 7/64

(21) Application number: **02360026.5**

(22) Date of filing: **11.01.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **ALCATEL**
**75008 Paris (FR)**

(72) Inventors:
• **Van Doorselaer, Bart**
 **9090 Melle (BE)**
• **Nguyen Tu-Anh**
 **1070 Brüssel 7 (BE)**

(74) Representative: **Rausch, Gabriele, Dr. et al**
**Alcatel**
**Intellectual Property Department, Stuttgart**
**70430 Stuttgart (DE)**

(54) **Method and modules for transmitting and receiving compressed data**

(57)    The present invention relates to a method for transmitting digital audio and/or video data. The invention furthermore relates to a first and a second communication device and a first and a second program module therefor.

The method comprises the steps of:

- Dividing of digital audio and/or video data (S1, S2) of a first data stream (IDS) into first frames (F1-F5).
- Frame-based encoding of the first frames (F1-F5) into second frames (V1P-V3P; V1-V20 containing compressed data of the first data stream (IDS).
- Generating a flow of messages of a real time protocol, a majority of the messages containing at least one first frame (V1) of the second frames and a state information (SI1) needed to decode the first frame (V1). The state information (SI1) is derivable from a second frame (V1P-V3P) provided that it is available. The second frame (V1P-V3P) precedes the first frame (V1) and is contained in a message preceding the message containing the first frame (V1) to be decoded.
- Transmitting the messages from a first (CD; T11; S21; ACC) to a second communication device (CD; T31; T12).
- Decoding the second frames (V1P-V3P; V1-V20), thereby evaluating the respective state information (SI1) contained in a respective message to decompress the respective first frame (V1) being contained in the respective message (M1).

Fig. 4

EP 1 328 122 A1

## Description

## Background of the Invention

The present invention relates to a method for transmitting digital audio and/or video data. The invention furthermore relates to a first and a second communication device therefor, a first program module for a first communication device therefor and a second program module for a second communication device therefor.

Digital audio and/or video data is usually compressed prior its transmission in order to save transmission capacity. The compression is especially of advantage when real time transmission is required. To this end so-called codecs are used. Codec is an abbreviation for compression/decompression. A codec can be either a software application or a hardware device that processes audio/video data through complex algorithms, which compress the data at the sending side and decompress the data at the receiving side for playback.

The compression and decompression may be performed sample by sample ("sample-based") or, e.g., frame by frame ("frame-based"). Each frame is a data block containing a predetermined amount of audio and/or video data, that is encoded into another block or frame containing compressed data. A GSM codec, e.g., performs frame-based compression/decompression (GSM = Global System for Mobile communication).

The frame-based compression/decompression may be performed "state-based/stateful" or "stateless".

"Stateless" means that each frame is encoded independently and may be consequently decoded independently as well. The encoded frames may be transmitted from a first to a second communication device via a network, for example from a voice terminal to a Personal Computer via the Internet. If real time transmission is requested, a real time protocol, e.g. the RTP (Real-time Transport Protocol) as recommended by the IETF (Internet Engineering Task Force), is typically used. Even if an RTP-packet containing one or more encoded frames out of stream of RTP-packets is lost, the frames following the lost frames can basically be decoded without loss or nearly without loss. There is no loss propagation effect caused by the lost frames. There is only loss caused by the compression / decompression operation and, of course, the lost data of the lost frame(s).

"State-based/stateful" means that each frame is encoded using information derived from previous frames. This method of compression may look for information that is not necessary for continuity to the human ear or eye. For example a change of frame in comparison with a preceding frame is evaluated for the compression. One advantage of state-based/stateful compression is its better compression quality and/or efficiency. However, if such state-based/stateful encoded frames are transmitted during a real time communication, the quality requirements are relatively high. If for example an RTP-packet containing encoded frames is lost, the frames being contained in the RTP-packets following the lost RTP-packet cannot be decoded or can only be decoded with significant loss. There is an undesirable propagation effect that deteriorates substantially the quality of the real time communication.

In this context it has to be noted, that during a non-real time communication, for example download of video data from a server, basically a lost packet may, no doubt, be re-requested by the receiving side and re-transmitted by the sending side. However, the re-transmission causes considerable load at all sides involved, i.e., the re-requesting receiver, the re-transmitting sender, and network connecting the sender and the receiver.

## Summary of the Invention:

Accordingly one object of the invention is to provide a method, devices and modules capable of an improved transmission of frames containing state-based/stateful compressed video and/or audio data.

This object is to be attained by methods in accordance with the technical principle of claim 1, a first and a second communication device therefor, a first program module for a first communication device therefor and a second program module for a second communication device therefore, said communication devices and program modules being in accordance with technical principles of further independent claims.

In this respect one principle of the invention is that digital audio and/or video data of a first data stream is divided into first frames. The digital audio data contains, e.g., voice data, music data (for example for an interactive karaoke) and the like. Subsequently, the first frames are encoded frame-by-frame into second frames. The second frames contain the data of the first frames as compressed data. It has to be noted, that one second frame may contain compressed data of two or more first frames or of a fraction of first frame. The second frames are packed into messages of a real time protocol, thereby generating a flow of messages.

Each of these messages contains at least one frame of the second frames. Furthermore, each of these messages or at least a majority of the messages contain a state information needed to decode the at least one frame contained in the respective message. The state information is derived from at least one second frame of the second frames - provided that it is available. The at least one second frame of the second frames is a frame preceding the at least one frame to be decoded and is contained in a message preceding the message containing the at least one frame to be decoded. Even if it is preferred, that all messages contain a state information, it may be sufficient that only the 'majority of the messages' contains a state information. For example the first message of the stream may not comprise a state information.

The first frames, the 'original' frames, are for example encoded according to the formula

$$V_i = E(F_i, S_i)$$

whereby $V_i$ is the second frame generated by an encoding operation E. $F_i$ is the (first) frame to be encoded and $S_i$ is a state information derived from previous frames, e.g. from 3 preceding frames $F_{i-1}$, $F_{i-2}$, $F_{i-3}$ according to, e.g., the formula

$$S_i = S(F_{i-1}, F_{i-2}, F_{i-3})$$

whereby S is the state information evaluation operation evaluating the frames $F_{i-1}$, $F_{i-2}$, $F_{i-3}$. A message according to the invention contains the second ('compressed') frames and the state information. The message is transmitted from a first to a second communication device and may have, e.g., a payload like:

$$[S_i, V_i, V_{i+1}, V_{i+2}, V_{i+3}, V_{i+4}]$$

whereby $V_i$, $V_{i+1}$, $V_{i+2}$, $V_{i+3}$, $V_{i+4}$ are subsequent second (= encoded) frames and $S_i$ is a state information needed to decode the first frame $V_i$ of the message. It is clear, that the state information $S_i$ may at least partly be used to decode also one or more of the frames $V_{i+2}$, $V_{i+3}$, $V_{i+4}$. Furthermore, the message may contain more or less frames than the frames $V_{i+1}$, $V_{i+2}$, $V_{i+3}$, $V_{i+4}$.

The second communication device decodes, e.g., by means of a program module according to the invention, the second frames contained in the received messages. Thereby the second communication device evaluates the respective state information contained in respective message to decompress the respective at least one first frame that is contained in the respective message.

The respective state information is at least in such case evaluated, if one or more preceding messages and the frames contained therein are lost. In such a scenario the receiving second communication device decodes the first frame $V_i$ of the message for example according to the formula:

$$F'_i = D(V_i, S_i)$$

whereby D is the decoding operation on a second frame $V_i$ evaluating the state information $S_i$, thereby generating a decoded version $F'_i$ of the original first frame $F_i$. It has to be noted, that usually compression/decompression implies certain loss and/or the state information $S_i$ is to some extend insufficient. Thus, the original first frame $F_i$ cannot completely be recovered but a decoded version $F'_i$ that is to some extend different from the original frame $F_i$.

If however there were no loss during compression/decompression, the above formula would be

$$F_i = D(V_i; S_i)$$

The subsequent second (= encoded) frame $V_{i+1}$ may be decoded to a frame $F'_{i+1}$, e.g., according to the formula:

$$F'_{i+1} = D(V_{i+1}; S'_{i+1})$$

Whereby $S'_{i+1}$ is an estimate of a state info based on, e.g., the available previous encoded frame $V_i$ and/or further previous frames, e.g., $V_{i-1}$, $V_{i-2}$, and/or the available already decoded frame $F'_i$, and/or further previous decoded frames, e.g., $F'_{i-1}$, $F'_{i-2}$, for example:

$$S'_{i+1} = ES_a(V_i)$$

or

$$S'_{i+1} = ES_a(V_i, V_{i-1}, V_{i-2})$$

or

$$S'_{i+1} = ES_a(V_i, F'_i)$$

or

$$S'_{i+1} = ES_a(F'_i)$$

or

$$S'_{i+1} = ES_a(F'_i, F'_{i-1}, F'_{i-2})$$

whereby $ES_a$ is an estimate function evaluating the encoded frames $V_i$, $V_{i-1}$, $V_{i-2}$ and/or the already decoded frames $F'_i$, $F'_{i-1}$, $F'_{i-2}$ thereby determining the state information $S'_{i+1}$. The estimate function may optionally also evaluate the state information $S_i$ for example:

$$S'_{i+1} = ES'_a(F'_i; S_i)$$

The further subsequent second (= encoded) frames $V_{i+2}$, $V_{i+3}$ may be decoded accordingly, whereby a further estimate function $ES_b$ may evaluate more preceding frames, for example:

$$S'_{i+2} = ES_b \ (F'_i; F'_{i+1})$$

The further frames $V_{i+2}$, $V_{i+3}$, $V_{i+4}$ are accordingly decoded.

Advantageous further effects of the invention will be seen from the dependent claims and the specification.

Preferably the respective state information contained in one of the messages is used to decode only the first frame of the message. A frame following the first frame may be decoded by a state information derived from the first frame and/or decoded data determined by means of the first frame, e.g., the decoded first frame.

Not only a state information may be contained in the messages but also additional information, e.g., about a type of a encoding scheme and/or about a type of the state information and/or about the respective length of the state information and/or about the number of frames contained in the respective message

The state information is preferentially comprised in a header preceding the first frame of a respective message. This header may also at least partly contain the additional information mentioned above. The additional information may also be comprised in an additional further header.

A suitable embodiment of the invention provides that the state information $S_i$ is a complete state information needed to decode at least the first frame $V_i$ of the message. 'Complete state information' in a sense, that the frame $V_i$ may be decoded without loss or nearly without loss by means of the state information $S_i$.

However, it may be the case, that the first frame $V_i$ (and/or one or more of the further frames $V_{i+1}$, $V_{i+2}$, $V_{i+3}$, $V_{i+4}$) may be decoded based on the state information $S_i$ not with best but with satisfactory quality. To obtain the best quality, the decoding (receiving) device may evaluate also at least one frame preceding the frame $V_i$, e.g., frames $V_{i-1}$, $V_{i-2}$, if the message containing the preceding frames $V_{i-1}$, $V_{i-2}$ is available (and not lost).

If the message containing the preceding frames $V_{i-1}$, $V_{i-2}$ was available the first frame $V_i$ may also be decoded only by a state information that the decoding device gains from the preceding frames $V_{i-1}$, $V_{i-2}$. The decoding device may additionally evaluate the state information $S_i$ being contained in the respective message containing the first frame $V_i$ to be decoded.

The first frames or at least nearly each of the first frames to be encoded contain at least two samples of digital audio and/or video data. Preferably a first frame contains a plurality of samples.

The following description will serve to explain the advantages of the invention on the basis of working examples as illustrated in the accompanying drawings.

**Brief Description of the Drawings:**

Figure 1    shows an arrangement for the performance of the method in accordance with the invention using networks NW1, NW2, NW3.

Figure 2    shows a block diagram for a communication device CD in accordance with the invention, the communication device CD being a communication device of the networks NW1, NW2, NW3 according to figure 1.

Figure 3    shows a message M1 in accordance with the invention, the message M1 being for example generated by the communication device CD according to figure 2.

Figure 4    shows very diagrammatically an encoding procedure in accordance with the invention.

Figure 5    shows very diagrammatically a decoding procedure in accordance with the invention.

Figure 6    shows a modification of the encoding procedure according to figure 4.

Figure 7    shows a modification of the decoding procedure according to figure 5.

**Detailed Description of the Invention:**

Reference will now be made in detail to the present preferred embodiments of the invention as illustrated in the accompanying drawings. In describing the preferred embodiments and applications of the present invention, specific terminology is employed for the sake of clarity. However, the invention is not intended to be limited to the specific terminology so selected, and it is understood that each specific element includes all technical equivalents which operate in a similar manner to accomplish a similar purpose.

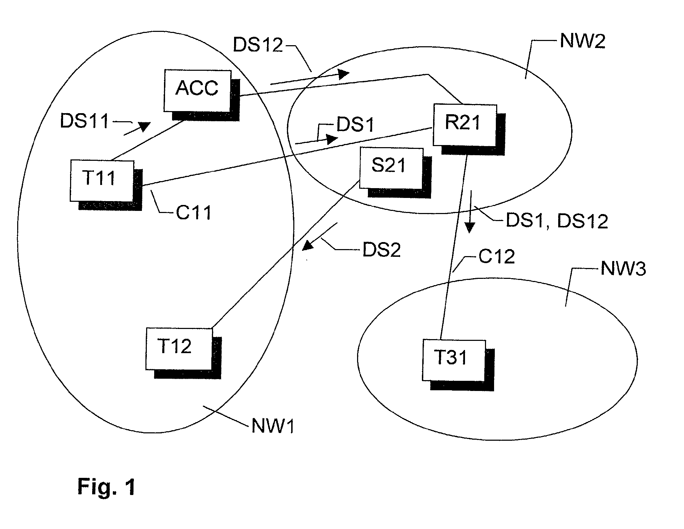

Figure 1 shows a very diagrammatically presented arrangement by way of example, with which the invention may be put into practice. Networks NW1 and NW3 are interconnected via a network NW2. The networks NW1 - NW3 are routed and/or switched networks. The network NW1 is for example an integrated services digital network (ISDN) and/or an access network, the network NW2 a mobile radio network providing data transmission, e.g. via Wireless Application Protocol (WAP), or a local area network (LAN), e.g., an Ethernet based LAN. The intermediate network NW2 is, e.g., the Internet. The networks NW1-NW3 support real time communication based on a real time protocol, e.g., the RTP (Real-time Transport Protocol) according to the definitions of the IETF (Internet Engineering Task Force).

The network NW1 comprises inter alia terminals T11, T12 and an access server ACC, the network NW3 a terminal T31. The network NW2 comprises a router R21 and a server S21. The networks NW1-NW3 may comprise further communication devices not shown in the drawing, e.g., further routers, terminals, hubs, switching centers and the like. The terminals T11, T12 T31 may be for example personal computers or mobile telephone terminals.

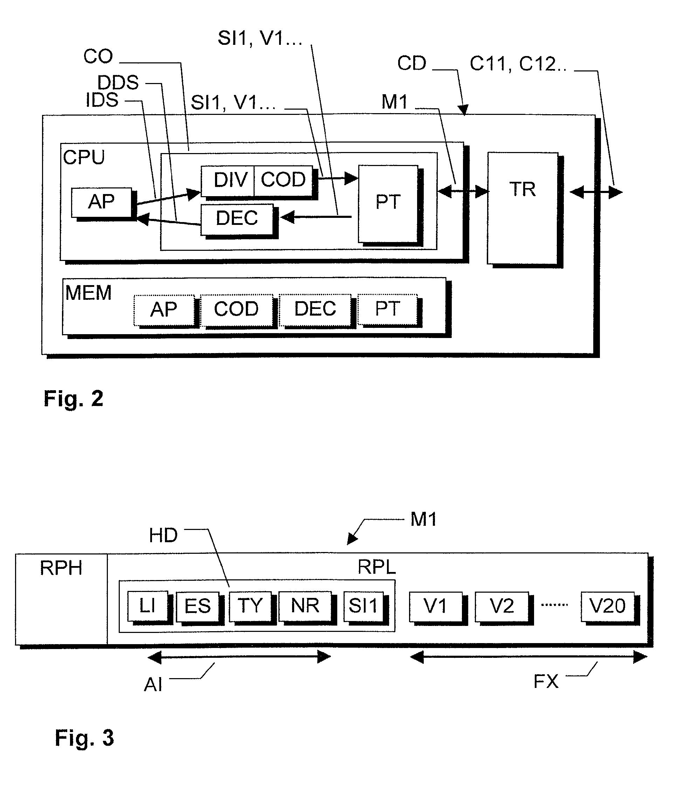

For simplification the terminals T11, T12 T31, the access server ACC, the router R21 and the server S21 are of similar design and only diagrammatically depicted as block diagrams of functions. Figure 2 shows, e.g., a block diagram for a communication device CD that may be the terminal T11, T12 T31, the router R21 or the server S21. The communication device CD possesses connecting means TR for the transmission and reception of data, e.g., via connections C11, C12 described below. The connecting means TR for example may comprise Ethernet boards, modems, ISDN (integrated services digital network) adapters or wireless interface modules. Furthermore the communication device CD possesses control means CPU and memory means MEM which are connected with each other and with the connecting means TR by connections, which are not illustrated. The control means CPU are for example processors or processor arrays with which a program code of program modules may be executed, which are stored in memory means MEM, for example program code of an application program module AP, a coding module COD, a decoding module DEC and a message generator and evaluator module PT. The memory means MEM are for instance in the form of hard disks or RAM modules. Furthermore the communication device CD may have display means as for example LCD's (liquid crystal displays) and input means, for example a keyboard and/or a computer mouse. Further components which are not illustrated are speakers and microphones for voice input and output. The communication device CD is run by an operating system as for instance Unix, Windows NT or preferably by a real time operating system.

The communication device CD represents both a first and a second communication device according to the invention. To this end, the communication device CD comprises a first and a second program module (COD, DEC) according to the invention. In the present embodiment the first and second program modules are represented by a module CO, that comprises the program modules COD, DEC and PT.

The application program module AP is for example a data base providing video and/or audio data or an audio and/or video player application, a karaoke player, a telephone conference application for providing a voice and/or video conference service or the like.

In a first example the terminal T11 establishes a connection C11, C12 to the terminal T31 via the network NW2, i.e., via the router R21. The terminals T11, T31 communicate audio data, e.g. voice data or music. The communication may be interactive. The example shows a message flow DS1 containing this audio data. The terminal T11 sends the message flow DS1 to the terminal T31 using a real time protocol, e.g., the RTP (Real-time Transport Protocol) according to the IETF.

The message flow DS1 is based on a first digital data stream IDS of audio data that is generated by the application program AP of the terminal T11. The application program AP forwards the data stream IDS to the module COD. A division function DIV that is presently a part of the module COD divides the digital audio data of the first data stream IDS into first frames F1 to F5 and possibly further frames not shown. The frames F1 to F5 contain audio samples. For example the frame F1 contains samples S1 and S2 and further samples which are not denominated in particular.

The division function DIV might also be separate module or a part of a module separate from the module COD, e.g., part of the application program AP. In this scenario, the module COD is equipped to only receive the first frames F1 to F5 that contain already divided digital audio data.

The module COD encodes the first frames F1 to F5 and possibly further first frames not shown into second frames V1 P- V3P; V1 to V20 and possibly further second frames not shown. The module COD performs frame-based encoding of the data stream IDS contained in the first frames F1 to F5. The second frames V1P- V3P; V1 to V20 contain compressed data of the data stream IDS.

The module COD encodes the first frames F1 to F3 into the second frames V1 P- V3P and the first frames F4, F5 as well as further first frames not shown into the second frames V1 to V20 and further second frames not shown.

The module COD forwards the second frames V1 P- V3P to the message generator and evaluator module PT. The module PT packs the frames V1 P - V3P into a message M1P that is not shown in detail. The module PT forwards the message M1P to the connecting means TR. The connecting means TR in turn transmit the message M1P via the connection C11, C12 to the terminal T31. The message M1P may be the first message of the message flow DS1.

The encoding of the frames F4 and F5 is explained in more detail. The module COD encodes the frame F4 into the frame V1. To this end, the module COD evaluates the preceding second frames V1 P - V3P, thereby determining a state information SI1. The module COD uses the state information SI1 to encode the frame F4 into the frame V1.

Accordingly, the module COD encodes the frame F5 into the frame V2 based on a state information SI2 that is derived from frames V2P, V3P and V1. The further second frames V3 to V20 may be generated accordingly.

It has to be noted that the state information SI1, SI2 and further state information not shown may also be derived from only one preceding frame or from more than two or three preceding frames. The state information SI1 might for example be derived from the frame V3P or from a part of frame V3P.

It is furthermore not mandatory that one first frame F1-F5 is encoded in one second frame V1P-V2. It may also be the case that a second frame is based on more than one first frames or that one first frame is encoded into more than one second frames.

The module COD provides the second frames V1 to V20 and the state information SI1 for the module PT. The module PT generates a message M1 comprising the state information SI1 and the second frames V1 to V20. The state information SI1 will be needed to decode the first frame V1 of the second frames V1 to V20. The module PT forwards the message M1 to the connecting means TR which transmit the message M1 via the connection C11, C12 to the terminal T31. The message M1 is the second message of the message flow DS1. Accordingly, the terminal T11 may send further messages within the message flow DS1.

It has to be noted that in the present embodiment the message M1 contains a state information in contrast to the message M1 P, which is the first message of the message flow DS1 and which contains no state information, because there is no frame preceding the frame V1 P available. It may however be the case that also the first message of a message flow contains a state information. For example the message M1 P may contain a copy of the frame V1P as a state information.

The message M1 is a RTP message (RTP = Real-time Transport Protocol) with a RTP header RPH and a RTP payload RPL. The payload RPL contains a header HD and a frame payload FX with the second frames V1 to V20. The header HD comprises the state information SI1 and in the present embodiment additional information AI.

The additional information AI may contain various information that is helpful and/or mandatory to decode the frame payload FX. The additional information AI comprises presently a type of a encoding scheme ES. The encoding scheme ES indicates the method of encoding used by the module COD. Furthermore, the additional information AI contains a type information TY about the type of the state information SI1 and a length information LI indicating the length of the state information SI1. Thus, a state information may have a variable length. The additional information AI comprises also a number information NR about the number of the frames contained in the frame payload FX. The values of the number information NR of the messages M1P, M1 are for example 3 and 20 respectively.

The terminal T31 decodes the frames V1P-V3P; V1 - V20 contained in the messages M1P, M1 respectively. To this end the terminal T31 is equipped with the decoder/decoding module DEC that is a second program module according to the invention. The decoding module DEC is in the present embodiment a part of the module CO that contains also the modules COD and PT. It has however to be noted that the modules COD and DEC may also be separate modules. In cooperation with the decoding module DEC the module PT serves as a message evaluator module. The module PT might also be a component of the module DEC or module separate from the module CO.

The terminal T31 receives the messages M1P, M1 and possibly further messages of the message flow DS1 with the aid of the connecting means TR. The connecting means TR convey the messages M1P, M1 to the module PT that evaluates the messages M1 P, M1. The module PT forwards for example the frames V1P - V3P; V1 - V20 frame-by-frame to the module DEC.

The module DEC decodes/decompresses the frames V1P - V3P; V1 - V20 of the messages M1P, M1, thereby generating decoded frames DF1 - DF5 and further frames not shown. The decoded frames DF1 - DF5 are very similar to the original first frames F1 - F5. But since coding/decoding causes typically certain loss, the module DEC cannot recover the original first frames F1 - F5. The module DEC forwards the data of the decoded frames DF1 - DF5 as a data stream DDS to the application program module AP that is for example in the case of the terminal T31 an audio player.

The decoding operation on the frames V1 P - V3P is not explained in detail. Instead, the decoding operation on the second frames V1 - V2 is explained. Provided the message M1 P is available the module DEC may decode the frame V1 based on the frames V1P - V3P, e.g. based on a state information ESI1 derived from the frames V1P - V3P.

If however the message M1P is lost, e.g., due to a transmission error, the frames V1 P - V3P are not available. In such a scenario the decoded frames DF1 - DF3 may not be recovered due to the missing frames V1P - V3P. The frames DF4, DF4 may however be recovered. To this end, the module DEC evaluates the state information SI1 to decode/decompress the frame V1 thereby generating the frame DF4.

Subsequently, the module DEC decodes the frame V2 thereby generating the frame DF5. To decode the frame V2 the module DEC evaluates the frame V1. Additionally, the module DEC may also evaluate the state information SI1. The evaluation of the frame V1 and/or the state information SI1 produces an estimated state information ESI2 that is similar to the state information SI2. The estimated state information ESI2 is only similar because the frames V2P, V3P are in the present example not available to recover the original state information SI2.

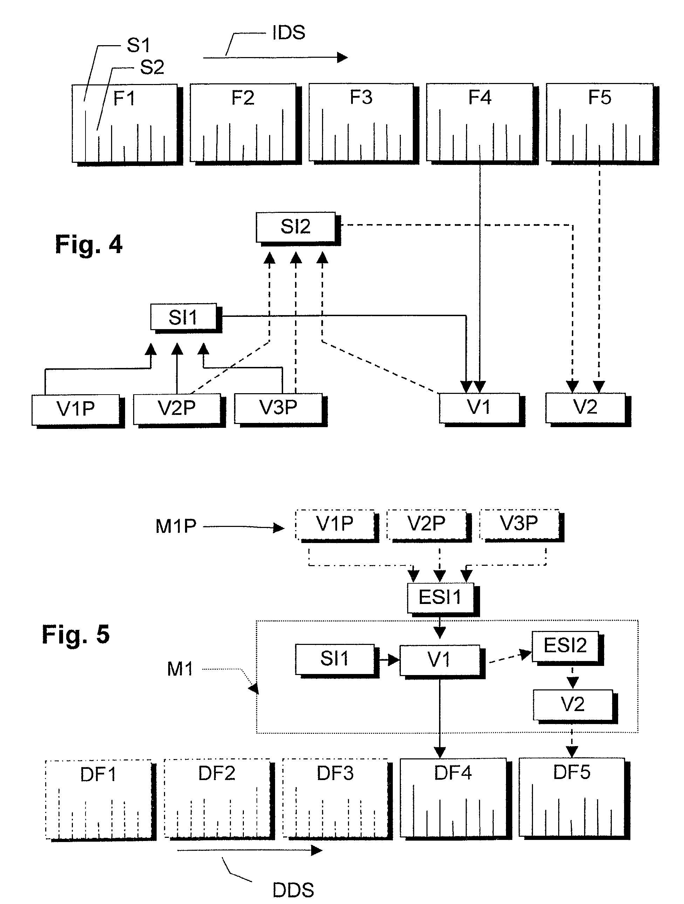

If however only one preceding frame or only a part of a preceding frame is needed to recover a state information, not only the estimated state information ESI2 but the original state information could be recovered SI2. In a modification of the example of figure 5 only the frame V1 (and not the frames V2P, V3P) could be for example sufficient to recover the original state information SI2.

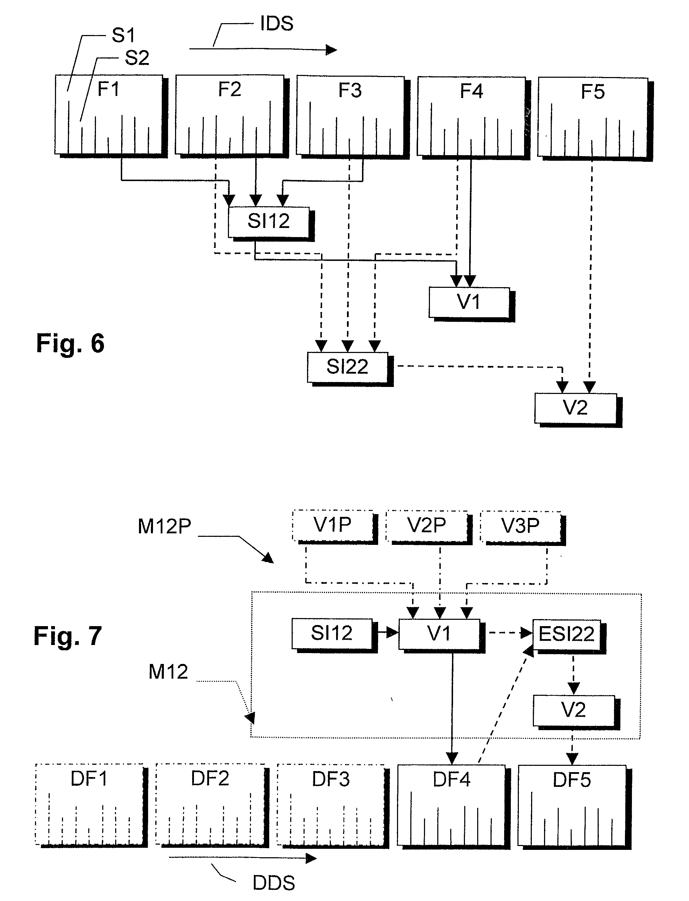

Figure 6 shows a modification of the encoding example of figure 4. In this embodiment a state information SI12 is generated based on the first frames F1 to F3 and a state information SI22 is generated based on the first frames F2 to F4. The state information SI12, S22 correlate to the state information SI1, SI2 respectively. The state information SI12 may be packed into a message M12 similar to the message M1 that comprises the state information SI1.

Accordingly, the frame V1 may be decoded using the state information SI12 as shown in figure 7. Subsequently, for decoding the frame V2, the module DEC determines an estimated state information ESI22 based on the state information SI12 and/or the decoded frame DF4 that is derived from the encoded frame V1. The state information ESI22 may be also based on the frame V1.

The encoding of frames and the generation of RTP messages containing a state information according to the invention may be performed by various devices.

Instead of the terminal T11 for example the router R21 or any other device not shown may provide the encoding of frames and/or the packing of the encoded frames into RTP messages that also contain a state information according to the invention. If for example the terminal T11 would have not been capable of the inventive encoding operation explained above the router R21 could serve as an encoder according to the invention.

Also the decoding operation may be performed by the router R21 or any other device not shown. If for example the terminal T31 would have not been capable of the inventive decoding operation explained above the router R21 could serve as a decoder according to the invention.

In a further embodiment of the invention the terminal T11 establishes the connection to the terminal T31 via the access server ACC. The access server ACC provides access to the network NW2 for communication devices of the network NW1. Furthermore, the access server ACC is a coder/decoder according to the invention providing coder/decoder services for, e.g., the terminal T11.

The terminal T11 sends for example a digital data stream DS11 to the access server ACC which in turn divides the data stream DS11 into first frames, encodes the first frames into second frames, packs the second frames into RTP messages containing additionally a state information as explained above. The access server ACC forwards the RTP messages in a flow DS12 to the router R21 which transmits the RTP messages to the terminal T31.

In the opposite direction the access server ACC may decode messages sent by the terminal T31 to the terminal T11. The messages may also contain encoded frames and a state information needed to decode at least the first encoded frame of a respective message as explained above.

The server S21 is a video server providing real time video data. The video data may be stored as digital data files which the server S21 encodes case-by-case. The server S21 divides the digital video data into first frames, encodes the first frames into second frames and packs the second frames into RTP messages containing additionally a state information. Subsequently, the server S21 forwards the RTP messages within a message flow, e.g., a message flow DS2, to a device requesting the video data, e.g. to the terminal T12. The terminal T12 extracts the second frames and the state information from the messages and decodes the second frames as explained above.

The server S21 may also store video data as already encoded second frames in combination with state information in a data base, e.g., represented by the module AP. In such a scenario there is no encoding operation necessary. The server S21 just packs the encoded second frames together with an additional a state information as explained above into RTP messages.

Although the foregoing invention has been described in some detail for purposes of clarity of understanding, it will be apparent that certain changes and modifications may be practiced within the scope of the invention.

For example a message according to the invention may carry 'difference frames' instead of encoded second frames. Each difference frame represents the difference value of two subsequent second frames. In such a scenario the state information contained in a respective message is, e.g., the original encoded second frame that is used to determine the first difference frame of the respective message.

**Claims**

1. A method for transmitting digital audio and/or video data, the method comprising the steps of:

   - dividing of digital audio and/or video data (S1, S2) of a first data stream (IDS) into first frames (F1-F5),
   - frame-based encoding of data of said first frames (F1-F5) into second frames (V1P-V3P; V1-V20), said second frames (V1P-V3P; V1-V20) containing compressed data of said first data stream (IDS),
   - generating a flow (DS1; DS12; DS2) of messages (M1P, M1) of a real time protocol, a majority of said messages (M1P, M1) containing at least one first frame (V1, V2-V20) of said second frames (V1P-V3P; V1-V20) and a state information (SI1) needed to decode said at least one first frame (V1, V2-V20) of said second frames (V1P-V3P; V1-V20), said state information (SI1) being derivable from at least one second frame (V1P-V3P) of said second frames (V1P-V3P; V1-V20) provided that said at least one second frame (V1P-V3P) of said second frames (V1P-V3P; V1-V20) is available, said at least one second frame (V1P-V3P) of said second frames (V1P-V3P; V1-V20) preceding said at least one first frame (V1, V2-V20) of said second frames (V1P-V3P; V1-V20) and being contained in a respective message preceding (M1P) a respective message (M1) containing said at least one first frame (V1, V2-V20) of said second frames (V1P-V3P; V1-V20) and said state information (SI1),

- transmitting said messages (M1P, M1) from a first communication device (CD; T11; S21; ACC) to a second communication device (CD; T31; T12), and

- decoding said second frames (V1P-V3P; V1-V20) contained in said messages (M1P, M1), thereby evaluating said respective state information (SI1) contained in a respective message (M1) to decompress said respective at least one first frame (V1, V2-V20) of said second frames (V1P-V3P; V1-V20) being contained in said respective message (M1).

2. The method as claimed in claim 1, **characterized in that** a respective state information (SI1) contained in one of said messages (M1P, M1) is used to decode said first frame (V1) of said message (M1P, M1), and **in that** a further frame (V2) following said first frame (V1) and being also contained in said message (M1P, M1) is decoded by a state information (ESI2) derived from said first frame (V1) and/or from said state information (SI1) of said message (M1) and/or from a decoded frame (DF4) being derived from said first frame (V1).

3. The method as claimed in claim 1, **characterized in that** said second communication device (CD; T31; T12) determines a state information (ESI1) needed to decompress a respective at least one first frame (V1, V2-V20) of said second frames (V1P-V3P; V1-V20) being contained in a respective message (M1) by means of at least one second frame (V1P-V3P) of said second frames (V1 P-V3P; V1-V20) being contained in a message (M1P) preceding said respective message (M1) if said preceding message (M1P) is available, and **in that** said second communication device (CD; T31; T12) decompresses said at least one first frame (V1) of said second frames (V1P-V3P; V1-V20) by means of said self-determined state information (ESI1) and/or by means of said state information (SI1) being contained in said respective message (M1).

4. The method as claimed in claim 1, **characterized**

**in that** said messages (M1P, M1) further contain additional information (AI) about a type of a encoding scheme (ES) and/or about a type (TY) of said state information (SI1) and/or about the respective length (LI) of said state information (SI1) and/or about the number of frames (NR) contained in the respective message (M1P, M1).

5. The method as claimed in claim 1 and/or claim 4, **characterized in that** said additional information (AI) and/or said state information (SI1) is comprised in a header (HD) preceding the first frame (V1P; V1) of a respective message (M1P, M1).

6. The method as claimed in claim 1, **characterized in that** each of said first frames (F1-F5) or at least nearly each of said first frames (F1-F5) contain at least two samples (S1, S2) of said digital audio and/ or video data.

7. A first communication device for transmitting digital audio and/or video data (S1, S2), said first communication device (CD, TR11, ACC, S21) comprising means (CPU, MEM, TR, CO) for carrying out the steps of:

- frame-based encoding of data of first frames (F1-F5) into second frames (V1 P-V3P; V1-V20), said first frames (F1-F5) comprising digital audio and/or video data (S1, S2) of a first data stream (IDS) and said second frames (V1P-V3P; V1-V20) containing compressed data of said first data stream (IDS),

- generating a flow (DS1; DS12; DS2) of messages (M1P, M1) of a real time protocol, a majority of said messages (M1P, M1) containing at least one first frame (V1, V2-V20) of said second frames (V1P-V3P; V1-V20) and a state information (SI1) needed to decode said at least one first frame (V1, V2-V20) of said second frames (V1P-V3P; V1-V20), said state information (SI1) being derivable from at least one second frame (V1P-V3P) of said second frames (V1P-V3P; V1-V20) provided that said at least one second frame (V1P-V3P) of said second frames (V1P-V3P; V1-V20) is available, said at least one second frame (V1P-V3P) of said second frames (V1P-V3P; V1-V20) preceding said at least one first frame (V1, V2-V20) of said second frames (V1P-V3P; V1-V20) and being contained in a respective message (M1P, M1) preceding a respective message (M1P, M1) containing said at least one first frame (V1, V2-V20) of said second frames (V1P-V3P; V1-V20) and said state information (SI1), and

- transmitting said messages (M1P, M1) to a second communication device (CD; T31;T12).

8. A first communication device as claimed in claim 8, **characterized in that** it comprises means (DIV) for dividing of said digital audio and/or video data (S1, S2) of said first data stream (IDS) into said first frames (F1-F5).

9. A second communication device for receiving digital audio and/or video data (S1, S2), said second communication device (CD; T31; T12) being designed to cooperate with a first communication device (CD; T11; S21; ACC) according to claim 7 or 8, said second communication device (CD; T31; T12) comprising means (CPU, MEM, TR, CO) for carrying out the steps of:

   - receiving messages (M1P, M1) sent by a first communication device (CD; T11; S21; ACC), and
   - decoding said second frames (V1P-V3P; V1-V20) contained in said messages (M1P, M1), thereby evaluating said respective state information (SI1) contained in a respective message (M1P, M1) to decompress said respective at least one first frame (V1, V2-V20) of said second frames (V1P-V3P; V1-V20) being contained in said respective message (M1P, M1).

10. A first program module for a first communication device (CD; T11; S21; ACC), said first program module (CO; COD, PT) containing program code able to be executed by a control means (CPU) of said first communication device (CD; T11; S21; ACC) and said first program module making said first communication device (CD; T11; S21; ACC) carrying out the steps of:

   - frame-based encoding of data of first frames (F1-F5) into second frames (V1 P-V3P; V1-V20), said first frames (F1-F5) comprising digital audio and/or video data (S1, S2) of a first data stream (IDS) and said second frames (V1P-V3P; V1-V20) containing compressed data of said first data stream (IDS),
   - generating a flow (DS1; DS12; DS2) of messages (M1P, M1) of a real time protocol, a majority of said messages (M1P, M1) containing at least one first frame (V1, V2-V20) of said second frames (V1P-V3P; V1-V20) and a state information (SI1) needed to decode said at least one first frame (V1, V2-V20) of said second frames (V1P-V3P; V1-V20), said state information (SI1) being derivable from at least one second frame (V1P-V3P) (V1P-V3P; V1-V20) of said second frames (V1P-V3P; V1-V20) provided that said at least one second frame (V1P-V3P) of said second frames (V1P-V3P; V1-V20) is available, said at least one second frame (V1P-V3P) of said second frames (V1P-V3P; V1-V20) preceding said at least one first frame (V1, V2-V20) of said second frames (V1P-V3P; V1-V20) and being contained in a respective message (M1P, M1) preceding a respective message (M1P, M1) containing said at least one first frame (V1, V2-V20) of said second frames (V1P-V3P; V1-V20) and said state information (SI1), and
   - providing said messages (M1P, M1) for the transmission to a second communication device (CD; T31; T12).

11. A second program module for a second communication device (CD; T31; T12), said second communication device (CD; T31; T12) being designed to cooperate with a first communication device (CD; T11; S21; ACC) according to claim 7 or 8 and/or a first communication equipped with a first program module according to claim 10, said second program module (CO; DEC, PT) containing program code able to be executed by a control means (CPU) of said second communication device (CD; T31; T12) and said second program module making said second communication device (CD; T31; T12) carrying out the steps of:

   - receiving messages (M1P, M1) sent by said first communication device (CD; T11; S21; ACC), and
   - decoding said second frames (V1P-V3P; V1-V20) contained in said messages (M1P, M1), thereby evaluating said respective state information (SI1) contained in a respective message (M1P, M1) to decompress said respective at least one first frame (V1, V2-V20) of said second frames (V1P-V3P; V1-V20) being contained in said respective message (M1P, M1).

12. A program storage device, in particular a computer diskette, a digital versatile disc or a hard disk, having a first program module as claimed in claim 10 recorded thereon and/or having a second program module as claimed in claim 11 recorded thereon.

**Fig. 1**

CO

SI1, V1...

DDS

IDS

CD — C11, C12..

SI1, V1...

M1

CPU

DIV | COD

AP

PT

TR

DEC

MEM

AP | COD | DEC | PT

**Fig. 2**

M1

HD

RPH

RPL

LI | ES | TY | NR | SI1

V1 | V2 | ...... | V20

AI

FX

**Fig. 3**

Fig. 4

Fig. 5

**Fig. 6**

**Fig. 7**

EP 1 328 122 A1

**European Patent Office**

**EUROPEAN SEARCH REPORT**

Application Number

EP 02 36 0026

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 035 735 A (TOKYO SHIBAURA ELECTRIC CO) 13 September 2000 (2000-09-13) <br> * column 1, line 7 - column 3, line 49 * <br> * column 5, line 9 - column 9, line 38 * <br> * column 24, line 3 - column 25, line 17; figure 5 * | 1-12 | H04N7/24 <br> H04L29/06 <br> H04N7/64 |
| X | BASSO A ET AL: "Real-time MPEG-2 delivery based on RTP: Implementation issues" SIGNAL PROCESSING. IMAGE COMMUNICATION, ELSEVIER SCIENCE PUBLISHERS, AMSTERDAM, NL, <br> vol. 15, no. 1-2, <br> September 1999 (1999-09), pages 165-178, <br> XP004180643 <br> ISSN: 0923-5965 <br> * paragraph '02.1! - paragraph '02.3! * <br> * paragraph '3.3.2! * | 1-12 | |
| A | US 6 201 834 B1 (ZHU CHUNRONG) <br> 13 March 2001 (2001-03-13) <br> * column 1, line 6 - column 2, line 54 * <br> * column 4, line 37 - column 6, line 8 * | 1-12 | TECHNICAL FIELDS SEARCHED (Int.Cl.7) <br><br> H04N <br> H04L |
| A | CARLE G ET AL: "SURVEY OF ERROR RECOVERY TECHNIQUES FOR IP-BASED AUDIO-VISUAL MULTICAST APPLICATIONS" IEEE NETWORK, IEEE INC. NEW YORK, US, <br> vol. 11, no. 6, <br> 1 November 1997 (1997-11-01), pages 24-36, <br> XP000737463 <br> ISSN: 0890-8044 <br> * page 26, right-hand column - page 27, left-hand column * <br> * page 32 * | 1-12 | |

-/--

The present search report has been drawn up for all claims

| Place of search | Date of completion of the search | Examiner |
|---|---|---|
| MUNICH | 13 June 2002 | Guettlich, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**European Patent Office**

## EUROPEAN SEARCH REPORT

Application Number

EP 02 36 0026

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHUNG-HOW J T H ET AL: "Loss resilient H.263+video over the Internet" SIGNAL PROCESSING. IMAGE COMMUNICATION, ELSEVIER SCIENCE PUBLISHERS, AMSTERDAM, NL, vol. 16, no. 9, June 2001 (2001-06), pages 891-908, XP004245274 ISSN: 0923-5965 * the whole document * | 1-12 | |
| A | DANSKIN J M ET AL: "FAST LOSSY INTERNET IMAGE TRANSMISSION" PROCEEDINGS OF ACM MULTIMEDIA '95 SAN FRANCISCO, NOV. 5 - 9, 1995, NEW YORK, ACM, US, 5 November 1995 (1995-11-05), pages 321-332, XP000599041 ISBN: 0-201-87774-0 * paragraph '04.1! - paragraph '04.2! * | 1-12 | |

TECHNICAL FIELDS SEARCHED (Int.Cl.7)

The present search report has been drawn up for all claims

| Place of search | Date of completion of the search | Examiner |
|---|---|---|
| MUNICH | 13 June 2002 | Guettlich, J |

EPO FORM 1503 03.82 (P04C01)

**ANNEX TO THE EUROPEAN SEARCH REPORT
ON EUROPEAN PATENT APPLICATION NO.**   EP 02 36 0026

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2002

| Patent document cited in search report | | Publication date | Patent family member(s) | | Publication date |
|---|---|---|---|---|---|
| EP 1035735 | A | 13-09-2000 | EP | 1035735 A2 | 13-09-2000 |
| | | | JP | 2001148853 A | 29-05-2001 |
| US 6201834 | B1 | 13-03-2001 | NONE | | |

For more details about this annex : see Official Journal of the European Patent Office, No. 12/82